Europäisches Patentamt

European Patent Office

Office européen des brevets

(19)

(11) Publication number: **0 352 795 B1**

# EUROPEAN PATENT SPECIFICATION

(12)

(45) Date of publication of patent specification: **20.04.94** (51) Int. Cl.⁵: **F16C 39/06**

(21) Application number: **89113891.9**

(22) Date of filing: **27.07.89**

(54) **Magnetic bearing device.**

(30) Priority: **29.07.88 JP 191078/88**

(43) Date of publication of application:
**31.01.90 Bulletin 90/05**

(45) Publication of the grant of the patent:
**20.04.94 Bulletin 94/16**

(84) Designated Contracting States:
**DE FR GB**

(56) References cited:
**DE-A- 2 355 104      DE-A- 2 741 062**
**DE-A- 3 202 866      FR-A- 2 336 603**
**FR-A- 2 417 797      FR-A- 2 574 880**

**patent abstracts of japan vol.no. 9,84 (m-371)(1807) 13 april 1985,&jp-a-59 212519 (ntn toyo bearing k. k) 01 december 1984,*the hole document***

(73) Proprietor: **NIPPON FERROFLUIDICS CORPO-RATION**
**17-22, Akasaka 2-chome**
**Minato-ku Tokyo 107(JP)**

(72) Inventor: **Yamamura, Akira Nippon Ferrofluid-ics Corporation**
**17-22, Akasaka 2-chome**
**Minato-ku**
**Tokyo 107(JP)**

(74) Representative: **Strehl Schübel-Hopf Groening & Partner**
**Maximilianstrasse 54**
**D-80538 München (DE)**

EP 0 352 795 B1

## Description

This invention relates to a magnetic bearing device.

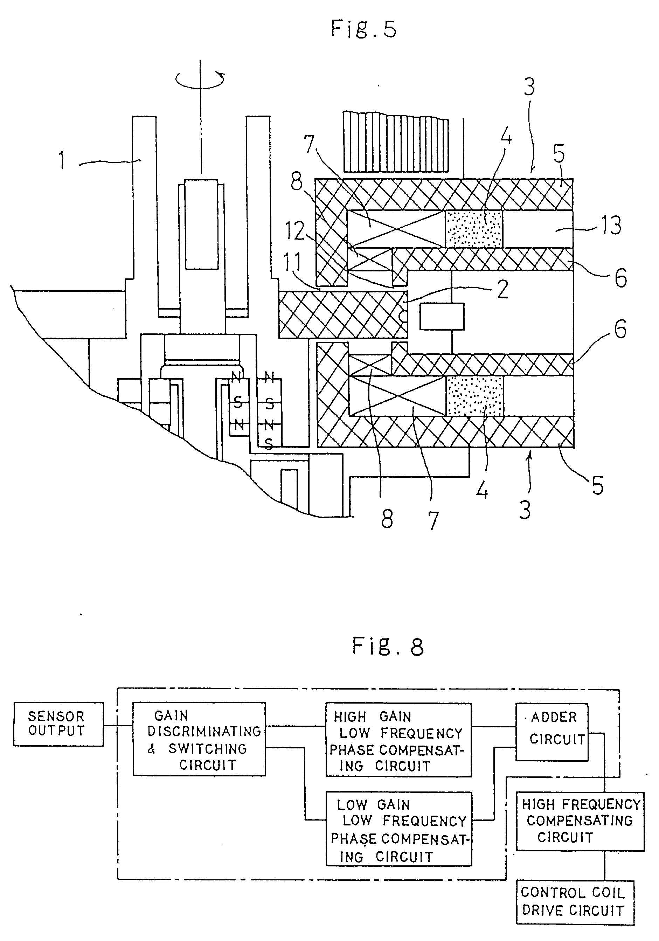

Figure 5 shows an example of known magnetic bearing devices conventionally used, and in which reference numeral 1 indicates a rotor to which an armature disk 2 is rotatably attached. A pair of bearing elements 3, 3 are disposed at positions on opposite sides in the axial direction of the armature disk 2. Each of the bearing elements 3, 3 comprises a pair of pole pieces 5, 6 attached to two pole faces of a permanent magnet 4. Each of the pole pieces 5, 6 comprises a part extending in parallel to the armature disk 2 and an end part extending from the mentioned part to a position adjacent the armature disk 2. A control coil 7 is disposed at a position nearer to the end part than the permanent magnet 4 between the pair of pole pieces 5, 6. A sensor coil 8 is disposed at a position nearer to the end part than the control coil 7. The sensor coil 8 is wound in the same direction as the control coil 7, to form a bridge between a pair of upper and lower sensor coils 8, 8 so as to differentially output variation of distance between the coil 8 and the armature disk 2.

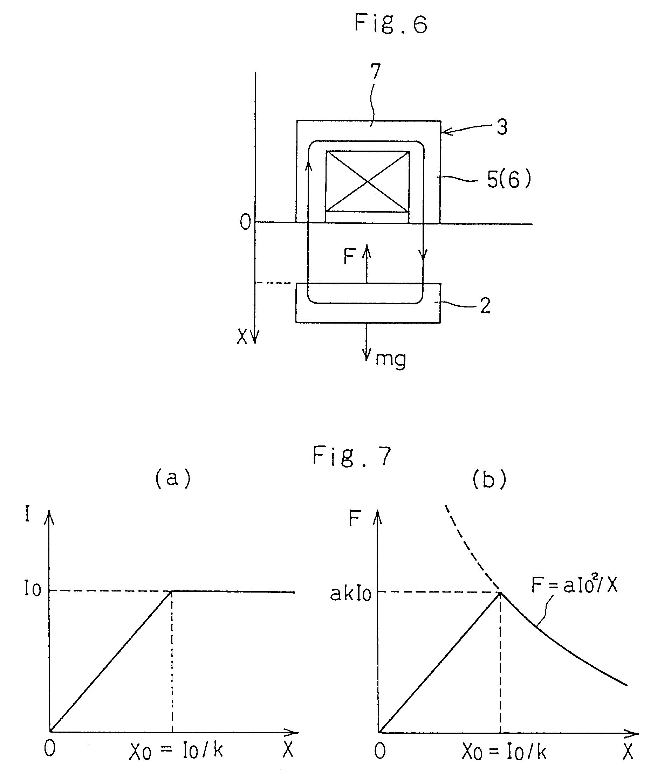

The known magnetic bearing device of the above construction is controlled by the control current of the control coil 7 in the following manner. For carrying out a simple control as shown in Figure 6, supposing that control current is I, displacement of the armature disk 2 is x and weight of the rotor 1 is mg, the force F acting on the armature disk 2 is expressed as follows:

$$F = a \cdot I^2/x \qquad (1)$$

(where: "a" is a proportional constant)
Accordingly, condition to be F = mg is expressed as follows:

$$I = \sqrt{mg \cdot x/a} \qquad (2)$$

This means that the current I required in the control coil 7 varies according to the position x where the magnetic attraction of the control coil 7 and the weight of the rotor 1 are balanced.

Accordingly, the control current I is controlled so as to be I = k · x in the prior art. This is rewritten as x = I/k, and when substituting this expression for x in the above expression (2), the following expression (3) is obtained:

$$I = mg/a \cdot k \qquad (3)$$

It is obviously understood from the above expression (3) that the rotor 1 can be magnetically supported by smaller current when the gain k is made larger.

Thus, it seems desirable that the gain k for establishing the control current I is as large as possible.

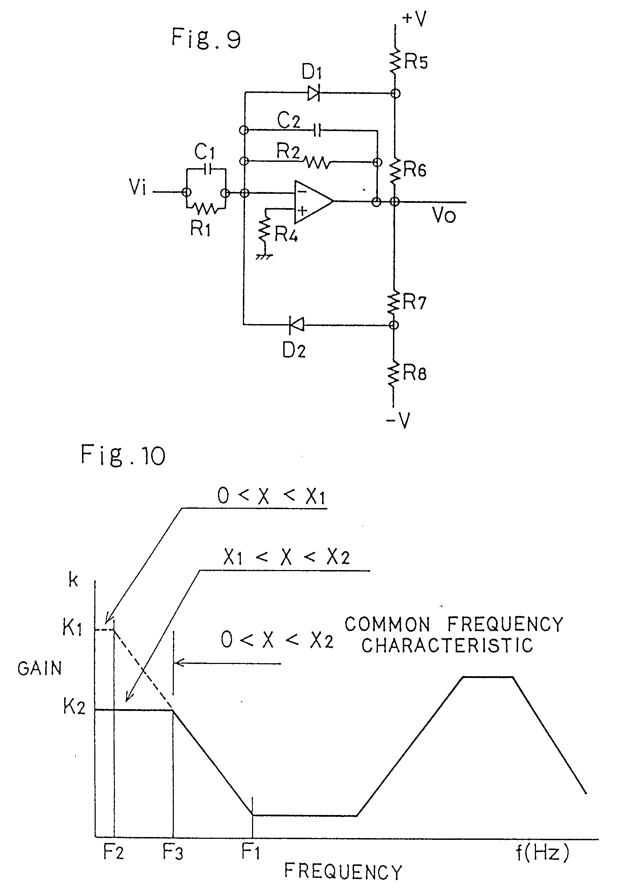

When making the gain k as large as possible, however, there arises the disadvantage that the stable region of the rotor 1 is narrowed with increased gain k. More specifically, establishing a maximum allowable current of the power supply for the control current as $I_0$, the magnetic attraction of the control coil 7 is lowered in the region of $x > I_0/k$ as shown in Figures 7(a) and (b), which results in an unstable magnetic support.

This disadvantage is overcome by a magnetic bearing device having the features included in the first part of the claim, which is known from DE-A-3 202 866. When employing this control system, however, through the gain k is high and a stable support is achieved in the displacement range of $0 \leq X \leq X_1$, there arises the disadvantage of easy oscillation.

## Summary of the Invention

It is an object of the present invention to provide a magnetic bearing device capable of stable operation, in which oscillations of the rotor are avoided.

This object is met by the device characterised in the claim.

## Brief Description of the Drawings

Figures 1 (a) and (b) are explanatory diagrams each showing an example of control characteristic of the magnetic bearing device as an embodiment according to this invention;

Figure 2 is an explanatory diagram showing the timing for inserting the soft limiter used in the above embodiment;

Figure 3 is a block diagram of an example of the control circuit adopted in the above embodiment;

Figure 4 is an explanatory diagram showing the relation between frequency and gain obtained in the embodiment;

Figure 5 is a sectional view of an example of the construction of the magnetic bearing device;

Figure 6 is an explanatory diagram of a model showing control characteristic;

Figures 7 (a) and (b) are explanatory diagrams showing control characteristics in the prior art;

Figure 8 is a block diagrams of an embodiment;

Figure 9 is a circuit diagram of a further embodiment; and

Figure 10 is a frequency characteristic diagram of the circuit shown in Figure 9.

### Description of the Preferred Embodiments

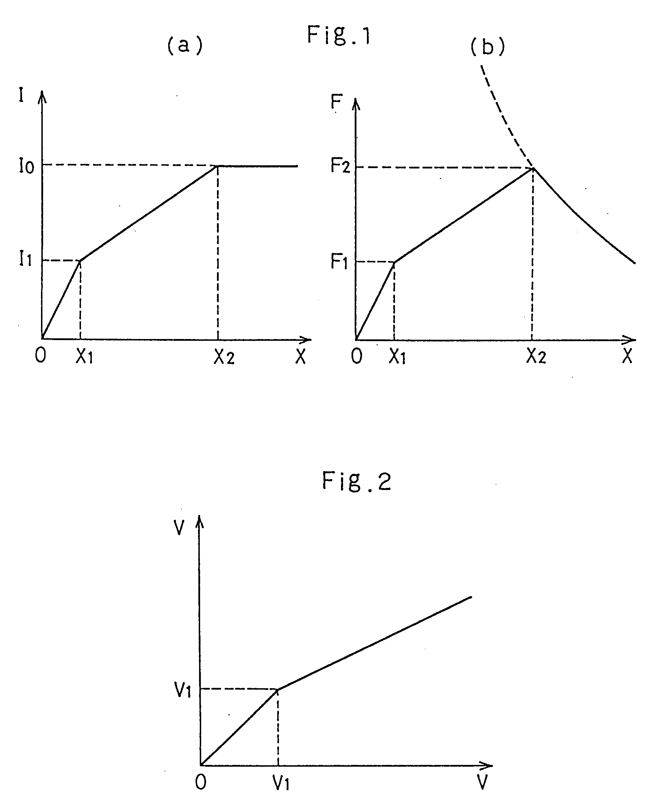

This magnetic bearing device adopts a control system so as to achieve a "displacement X - control current I characteristic" and a "displacement X - magnetic attraction F characteristic (stationary characteristic)" as shown in Figures 1(a) and (b). That is, it is intended in this embodiment that: $X_1$ is to be mg/a $\cdot$ $k^2 < x_1$; gain k is enlarged at this time; control current is reduced in the region of $0 < X < X_1$ when balancing the weight of the rotor 1 and the magnetic attraction of the control coil 7; while the gain k is returned to normal small value in the region of $X_1 < X < X_2$ to enlarge the stable region to $O < X < X_2$. To achieve such characteristics, a soft limiter is inserted in the control circuit.

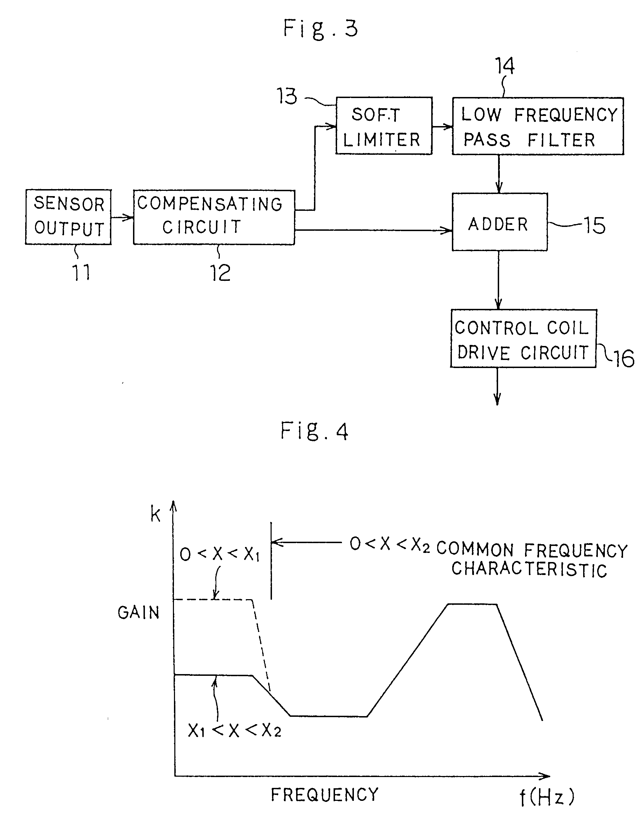

When employing the control system described above, though the gain k is high and stationary stability is attained in the area near the point zero of the range $0 < X < X_1$, there arises a disadvantage of easy oscillation. To prevent such disadvantage, a control circuit as shown in Figure 3 is employed. In the drawing, reference numeral 11 indicates an output circuit of the sensor coil 8, numeral 12 indicates a compensating circuit, numeral 13 indicates a soft limiter (gain control means), numeral 14 indicates a low frequency pass filter (frequency response control means), numeral 15 indicates an adder, and numeral 16 indicates a control coil drive circuit. As a result of such arrangement, control of the gain k is performed in low frequency region as mentioned above, while small gain k is kept throughout the $0 < X < X_2$ in high frequency region (see Figure 4).

This invention can be preferably applied to a magnetic bearing device of any constitution including the one shown in Figure 5.

The gain discrimination circuit or switching circuit shown in Figure 8 may be used instead of that shown in Figure 3. Figure 9 shows a more specified example of such circuit, and the frequency characteristic thereof is as shown in Figure 10.

### Claims

**1.** A magnetic bearing device comprising a control coil (7) which supports a rotor (1) in the vertical direction, and current control means which increases the current (I) supplied to the control coil (7) with increasing clearance (X) between the control coil (7) and the rotor (1),

the current control means comprising gain control means (13) which controls the current (I) with a larger gain (k) when said clearance (X) is smaller than a certain distance ($X_1$), than when the clearance (X) is larger than said distance ($X_1$),

characterised in that the current control means further comprises frequency response means (14) which suspends the control by said gain control means (13) in a high-frequency region of the rotor (1), while controlling the current (I) with a substantially constant gain (k) over the full range of controllable clearance (X).

### Patentansprüche

**1.** Magnetlager mit einer einen Rotor (1) in vertikaler Richtung unterstützenden Steuerspule (7) und einer Stromsteuereinrichtung, die den der Steuerspule (7) zugeführten Strom (I) mit zunehmendem Spielraum (X) zwischen der Steuerspule (7) und dem Rotor (1) erhöht,

wobei die Stromsteuereinrichtung eine Verstärkungssteuereinrichtung (13) umfaßt, die dann, wenn der Spielraum (X) kleiner ist als ein vorgegebener Abstand ($X_1$), den Strom (I) mit höherer Verstärkung (k) steuert als dann, wenn der Spielraum (X) größer ist als der vorgegebener Abstand ($X_1$),

dadurch gekennzeichnet, daß die Stromsteuereinrichtung außerdem eine frequenzabhängige Einrichtung (14) aufweist, die in einem Hochfrequenzbereich des Rotors (1) die Steuerung durch die Verstärkungssteuereinrichtung (13) aufhebt und den Strom (I) über den gesamten steuerbaren Bereich des Spielraums (X) mit im wesentlichen konstante Verstärkung (k) steuert.

### Revendications

**1.** Dispositif de palier magnétique comprenant une bobine de commande (7) qui supporte un rotor (1) dans le sens vertical et des moyens de commande de courant qui augmentent le courant (I) fourni à la bobine de commande (7) à mesure qu'augmente le jeu (X) entre la bobine de commande (7) et le rotor (1),

les moyens de commande de courant comprenant un moyen de commande de gain (13) qui commande le courant (I) avec un gain plus grand (k) lorsque ledit jeu (X) est inférieur à une certaine distance ($X_1$) que lorsque le jeu (X) est supérieur à ladite distance ($X_1$),

caractérisé par le fait que les moyens de commande de courant comprennent en outre un moyen de réponse en fréquence (14) qui suspend la commande par ledit moyen de commande de gain (13) dans une plage de haute fréquence du rotor (1) tout en commandant le courant (I) avec un gain sensiblement constant (k) sur toute la plage de jeu commandable (X).

Fig.1

(a)

(b)

Fig.2

Fig. 3

Fig. 4

## Fig.5

## Fig. 8

## Fig.6

## Fig.7

### (a)

### (b)

$$F = aI_0^2/X$$

Fig.9

Fig.10